# EUROPEAN PATENT APPLICATION

(11) **EP 4 819 523 A1**
(43) Date of publication of application: **07.10.2026**
(21) Application number: 23959922.8
(22) Date of filing: 30.11.2023
(51) Int. Cl.: H04L 5/00, H04W 24/02

(54) **MEASUREMENT METHOD, DEVICE, AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Dehns Germany Partnerschaft mbB
(86) International application number: PCT/CN2023/135726
(87) International publication number: WO 2025/112011

(57) **Abstract**

The present disclosure relates to a measurement method, a device, and a storage medium. The method comprises: sending first information to a terminal device, wherein the first information is used for configuring a first measurement gap and a second measurement gap for the terminal device, the first measurement gap is a network-controlled small gap (NCSG), the second measurement gap is a conventional measurement gap, the first measurement gap and the second measurement gap have an overlapping time period, and the first information is used for the terminal device to measure a reference signal on the basis of the first measurement gap and the second measurement gap; and stopping scheduling the reference signal within a specified gap time period, wherein the specified gap time period comprises a time period, within the overlapping time period, in which a radio frequency operation is performed. That is to say, a network device can control the scheduling of the reference signal within the overlapping time period in which a radio frequency operation is performed, so as to avoid the impact on serving cell measurement during concurrent measurement at the NCSG and the conventional measurement gap, thereby improving network performance.

## Description

### TECHNICAL FIELD

The present disclosure relates to the technical field of communication, and in particular, to a measurement method, a device, and a storage medium.

### BACKGROUND

In a wireless communication system, a network device may configure a measurement gap (MG) for a terminal device, and the terminal device needs to perform mobility measurement on a measurement object according to the MG configured by the network device, and report the measurement result of the mobility measurement to the network device, so that the network device performs mobility management on the terminal device.

### SUMMARY

Embodiments of the present disclosure provide a measurement method, a device, and a storage medium.

According to a first aspect of the embodiments of the present disclosure, a measurement method is provided. The method is performed by a network device and includes:
sending first information to a terminal device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap; and
stopping scheduling the reference signal within a specified gap time period, where the specified gap time period includes a time period for performing a radio frequency operation in the overlapping time period.

According to a second aspect of the embodiments of the present disclosure, a measurement method is provided. The method is performed by a terminal device and includes:
receiving first information sent by a network device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the network device stops scheduling a reference signal within a specified gap time period, where the specified gap time period includes a time period for performing a radio frequency operation in the overlapping time period; and
measuring the reference signal based on the first measurement gap and the second measurement gap.

According to a third aspect of the embodiments of the present disclosure, a network device is provided, including:
a transceiver module, configured to send first information to a terminal device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap; and
a processing module, configured to stop scheduling the reference signal within a specified gap time period, where the specified gap time period includes a time period for performing a radio frequency operation in the overlapping time period.

According to a fourth aspect of the embodiments of the present disclosure, a terminal device is provided, including:
a transceiver module, configured to receive first information sent by a network device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the network device stops scheduling the reference signal within a specified gap time period, where the specified gap time period includes a time period for performing a radio frequency operation in the overlapping time period; and
a processing module, configured to measure the reference signal based on the first measurement gap and the second measurement gap.

According to a fifth aspect of the embodiments of the present disclosure, a communication device is provided, including:
one or more processors; where the communication device can be configured to perform the optional implementations of the first aspect or the second aspect.

According to a sixth aspect of the embodiments of the present disclosure, a storage medium is provided. The storage medium stores instructions which, when run on a communication device, cause the communication device to execute the method described in the optional implementations of the first aspect or the second aspect.

According to a seventh aspect of the embodiments of the present disclosure, a communication system is provided, including:
a network device, configured to perform the method described in the optional implementations of the first aspect; and
a terminal device, configured to perform the method described in the optional implementations of the second aspect.

The technical solution provided by the embodiments of the present disclosure can include the following beneficial effects: first information is sent to a terminal device, where the first information is used to configure a first measurement gap and a second measurement gap for the terminal device, the first measurement gap is a network controlled small gap (NCSG), the second measurement gap is a legacy measurement gap, there is an overlapping time period between the first measurement gap and the second measurement gap, and the first information is used for the terminal device to measure a reference signal according to the first measurement gap and the second measurement gap; scheduling of the reference signal is stopped within a specified gap time period, where the specified gap time period includes a time period for performing a radio frequency operation in the overlapping time period. In other words, the network device can control the scheduling of the reference signal in the overlapping time period of the radio frequency operation, so as to avoid the impact on the measurement of the serving cell during parallel measurement of NCSG and legacy measurement gaps, and thereby improve network performance.

It should be understood that the above general description and the following detailed description are merely exemplary and explanatory, and are not intended to limit the present disclosure.

### BRIEF DESCRIPTION OF THE DRAWINGS

In order to more clearly illustrate the technical solutions in the embodiments of the present disclosure, the accompanying drawings required for describing the embodiments are introduced below. The following drawings are only some embodiments of the present disclosure, and do not impose specific limitations on the protection scope of the present disclosure.
FIG. 1A is a schematic diagram of an architecture of a communication system according to an embodiment of the present disclosure.
FIG. 1B is a schematic diagram of a measurement gap according to an embodiment of the present disclosure.
FIG. 2 is a schematic interaction diagram of a measurement method according to an embodiment of the present disclosure.
FIG. 3 is a flowchart of a measurement method according to an embodiment of the present disclosure.
FIG. 4A is a flowchart of a measurement method according to an embodiment of the present disclosure.
FIG. 4B is a flowchart of a measurement method according to an embodiment of the present disclosure.
FIG. 5 is a schematic interaction diagram of a measurement method according to an embodiment of the present disclosure.
FIG. 6A is a schematic structural diagram of a network device provided by an embodiment of the present disclosure.
FIG. 6B is a schematic structural diagram of a terminal device provided by an embodiment of the present disclosure.
FIG. 7A is a schematic structural diagram of a communication device provided by an embodiment of the present disclosure.
FIG. 7B is a schematic structural diagram of a chip provided by an embodiment of the present disclosure.

### DETAILED DESCRIPTION

Embodiments of the present disclosure provide a measurement method, a device, and a storage medium.

In a first aspect, embodiments of the present disclosure provide a measurement method, the method is performed by a network device, including:
sending first information to a terminal device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap; and
stopping scheduling the reference signal within a specified gap time period, where the specified gap time period includes a time period for performing a radio frequency operation in the overlapping time period.

In the above embodiments, the network device can control scheduling of the reference signal in the overlapping time period for the radio frequency operation, so as to avoid the influence on the measurement of the serving cell during parallel measurement of NCSG and legacy measurement gaps, and thus improve network performance.

With reference to some embodiments of the first aspect, in some embodiments, the first measurement gap and the second measurement gap having the overlapping time period includes at least one of the following:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

In the above embodiments, the first measurement gap and the second measurement gap having the overlapping time period covers multiple scenarios. The network device can perform resource control for parallel measurement under different scenarios, so as to further reduce the impact on the measurement of the serving cell and improve network performance.

With reference to some embodiments of the first aspect, in some embodiments, the reference signal includes a first reference signal and a second reference signal, the first reference signal is a reference signal corresponding to the first measurement gap, and the second reference signal is a reference signal corresponding to the second measurement gap.

The first information is used for the terminal device to measure the first reference signal within a first time period, measure the second reference signal within a second time period, and measure the first reference signal and the second reference signal in parallel within the overlapping time period, where the first time period includes a time period of the first measurement gap excluding the overlapping time period, and the second time period includes a time period of the second measurement gap excluding the overlapping time period.

In the above embodiments, during a time period where the first measurement gap and the second measurement gap do not overlap, the terminal device may separately measure the first reference signal and the second reference signal; during the overlapping time period, the terminal device can measure the first reference signal and the second reference signal in parallel, thereby improving measurement efficiency.

With reference to some embodiments of the first aspect, in some embodiments, stopping scheduling the reference signal within the specified gap time period includes:
when a partial time period of the first measurement gap is overlapped with a partial time period of the second measurement gap, stopping scheduling the second reference signal within the specified gap time period, where the specified gap time period is a time period of the second measurement gap overlapping with a first visible interruption length (VIL), and the first VIL is a time period for performing the radio frequency operation in the first measurement gap.

In the above embodiments, in a case where a portion of the time period of the first measurement gap is overlapped with a portion of the time period of the second measurement gap, the network device can stop scheduling resources of the second reference signal within the time period of the second measurement gap corresponding to the first VIL, so as to avoid interference to a measurement object of the second measurement gap, and thus improve the measurement accuracy of the measurement object corresponding to the second measurement gap.

With reference to some embodiments of the first aspect, in some embodiments, stopping scheduling the reference signal within the specified gap time period includes:
when the first measurement gap contains the second measurement gap and a duration of the first measurement gap is greater than a duration of the second measurement gap, stopping scheduling the first reference signal within the specified gap time period, where the specified gap time period is a time period of the first measurement gap overlapping with a third time period, and the third time period is a time period for performing the radio frequency operation in the second measurement gap.

In the above embodiments, in a case where the second measurement gap is contained within the first measurement gap, the network device can stop scheduling resources of the first reference signal in the time period of the first measurement gap corresponding to the time period for radio frequency operation in the second measurement gap, so as to avoid interference to a measurement object of the first measurement gap, and thus improve measurement accuracy of the measurement object corresponding to the first measurement gap.

With reference to some embodiments of the first aspect, in some embodiments, stopping scheduling the reference signal within the specified gap time period includes:
when the second measurement gap contains the first measurement gap and a duration of the second measurement gap is greater than a duration of the first measurement gap, stopping scheduling the second reference signal within the specified gap time period, where the specified gap time period includes a first VIL, and the first VIL is a time period for performing radio frequency operation in the first measurement gap.

In the above embodiments, in a case where the first measurement gap is contained within the second measurement gap, the network device can stop scheduling resources of the second reference signal in the time period of the second measurement gap corresponding to the first VIL, so as to avoid interference to a measurement object of the second measurement gap, and thus improve measurement accuracy of the measurement object corresponding to the second measurement gap.

With reference to some embodiments of the first aspect, in some embodiments, the reference signal includes at least one of the following:
a synchronization signal block (SSB);
a channel state information reference signal (CSI-RS); and
a positioning reference signal (PRS).

In the above embodiments, the reference signal can include multiple types, which makes the measurement mode more flexible.

With reference to some embodiments of the first aspect, in some embodiments, a frequency corresponding to the first measurement gap is different from a frequency corresponding to the second measurement gap.

In the above embodiments, frequencies of neighboring cells for parallel measurement by the terminal device are different, which realizes parallel measurement of inter-frequency layers.

With reference to some embodiments of the first aspect, in some embodiments, the first measurement gap and the second measurement gap are used for measuring a neighboring cell.

In the above embodiments, the parallel measurement of the neighboring cell is realized, and measurement efficiency is improved.

With reference to some embodiments of the first aspect, in some embodiments, a frequency of a serving cell where the terminal device is located is different from a frequency of the neighboring cell.

In the above embodiments, the parallel measurement of inter-frequency cells is realized, and measurement efficiency is improved.

With reference to some embodiments of the first aspect, in some embodiments, the terminal device is in a standalone (SA) operation mode.

In the above embodiments, when the terminal device is in the SA operation mode, it can perform measurement independently and avoid interference, so as to improve measurement accuracy.

In a second aspect, embodiments of the present disclosure provide a measurement method, the method is performed by a terminal device, including:

receiving first information sent by a network device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the network device stops scheduling reference signal within a specified gap time period, where the specified gap time period includes a time period for performing a radio frequency operation in the overlapping time period; and
measuring the reference signal based on the first measurement gap and the second measurement gap.

With reference to some embodiments of the first aspect, in some embodiments, the first measurement gap and the second measurement gap having the overlapping time period includes at least one of the following:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

With reference to some embodiments of the first aspect, in some embodiments, the reference signal includes a first reference signal and a second reference signal, the first reference signal is a reference signal corresponding to the first measurement gap, and the second reference signal is a reference signal corresponding to the second measurement gap, where measuring the reference signal based on the first measurement gap and the second measurement gap includes:
measuring the first reference signal within a first time period, where the first time period includes a time period of the first measurement gap excluding the overlapping time period;
measuring the second reference signal within a second time period, where the second time period includes a time period of the second measurement gap excluding the overlapping time period; and
measuring the first reference signal and the second reference signal in parallel within the overlapping time period.

With reference to some embodiments of the second aspect, in some embodiments, the method further includes:
stopping measuring the reference signal within the specified gap time period.

With reference to some embodiments of the second aspect, in some embodiments, stopping measuring the reference signal within the specified gap time period includes:
when a partial time period of the first measurement gap is overlapped with a partial time period of the second measurement gap, stopping measuring the second reference signal within the specified gap time period, where the specified gap time period is a time period of the second measurement gap that is overlapped a first visible interruption length (VIL), and the first VIL is a time period for performing the radio frequency operation in the first measurement gap.

With reference to some embodiments of the second aspect, in some embodiments, stopping measuring the reference signal within the specified gap time period includes:

when the first measurement gap contains the second measurement gap and a duration of the first measurement gap is greater than a duration of the second measurement gap, stopping measuring the first reference signal within the specified gap time period, where the specified gap time period is a time period of the first measurement gap that is overlapped with a third time period, and the third time period is a time period for performing the radio frequency operation in the second measurement gap.

With reference to some embodiments of the second aspect, in some embodiments, stopping measuring the reference signal within the specified gap time period includes:
when the second measurement gap contains the first measurement gap and a duration of the second measurement gap is greater than a duration of the first measurement gap, stopping measuring the second reference signal within the specified gap time period, where the specified gap time period includes a first VIL, and the first VIL is a time period for performing the radio frequency operation in the first measurement gap.

With reference to some embodiments of the second aspect, in some embodiments, the method includes:
determining that the second measurement gap contains the first measurement gap and a duration of the second measurement gap is greater than a duration of the first measurement gap, and not allowing an interruption to be introduced by the first measurement gap.

In the above embodiments, when the first measurement gap is contained within the second measurement gap, the introduction of the interruption by the first measurement gap is not allowed, thereby improving measurement efficiency.

With reference to some embodiments of the second aspect, in some embodiments, the reference signal includes at least one of the following:
a synchronization signal block (SSB);
a channel state information reference signal (CSI-RS); and
a positioning reference signal (PRS).

With reference to some embodiments of the second aspect, in some embodiments, a frequency corresponding to the first measurement gap is different from a frequency corresponding to the second measurement gap.

With reference to some embodiments of the second aspect, in some embodiments, the first measurement gap and the second measurement gap are used for measuring a neighboring cell.

With reference to some embodiments of the second aspect, in some embodiments, a frequency of a serving cell where the terminal device is located is different from a frequency of the neighboring cell.

With reference to some embodiments of the second aspect, in some embodiments, the terminal device is in a standalone (SA) operation mode.

In a third aspect, embodiments of the present disclosure provide a measurement method, the method including:
a network device sending first information to a terminal device, where the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap;
the terminal device measuring the reference signal based on the first measurement gap and the second measurement gap; and
the network device stopping scheduling the reference signal within a specified gap time period, where the specified gap time period includes a time period for performing a radio frequency operation in the overlapping time period.

In a fourth aspect, embodiments of the present disclosure provide a network device. The network device may include at least one of a transceiver module and a processing module, where the network device is configured to implement the optional implementations of the first aspect.

In a fifth aspect, embodiments of the present disclosure provide a terminal device. The terminal device may include at least one of a transceiver module and a processing module; where the terminal device is configured to implement the optional implementations of the second aspect.

In a sixth aspect, embodiments of the present disclosure provide a network device, including: one or more processors; where the network device is configured to implement the optional implementations of the first aspect.

In a seventh aspect, embodiments of the present disclosure provide a terminal device, including: one or more processors; where the terminal device is configured to implement the optional implementations of the second aspect.

In an eighth aspect, embodiments of the present disclosure provide a communication device, including: one or more processors; where the communication device is configured to implement the optional implementations of the first aspect or the second aspect.

In a ninth aspect, embodiments of the present disclosure provide a communication system. The communication system may include: a network device and a terminal device; where the network device is configured to perform the method described in the optional implementations of the first aspect, and the terminal device is configured to perform the method described in the optional implementations of the second aspect.

In a tenth aspect, embodiments of the present disclosure provide a storage medium. The storage medium stores instructions which, when executed on a communication device, cause the communication device to perform the method described in the optional implementations of the first aspect or the second aspect.

In an eleventh aspect, embodiments of the present disclosure provide a communication system, including:
a network device, configured to perform the method described in the optional implementations of the first aspect;
a terminal device, configured to perform the method described in the optional implementations of the second aspect.

In a twelfth aspect, embodiments of the present disclosure provide a program product. When the program product is executed by a communication device, the communication device is caused to perform the method described in the optional implementations of the first aspect or the second aspect.

In a thirteenth aspect, embodiments of the present disclosure provide a computer program. When the computer program runs on a computer, the computer is caused to perform the method described in the optional implementations of the first aspect or the second aspect.

In a fourteenth aspect, embodiments of the present disclosure provide a chip or a chip system. The chip or the chip system includes a processing circuit configured to perform the method described in the optional implementations of the first aspect or the second aspect.

It can be understood that the above-mentioned terminal device, network device, communication device, communication system, storage medium, program product, computer program, chip or chip system can all be used to perform the method provided by the embodiments of the present disclosure. Therefore, the beneficial effects achieved thereby may refer to the corresponding beneficial effects in the method embodiments, which will not be repeated herein.

Embodiments of the present disclosure provide a measurement method, a device, and a storage medium. In some embodiments, terms such as measurement method, information processing method and communication method can be replaced with each other; terms such as measurement apparatus, information processing apparatus, communication apparatus and communication device can be replaced with each other; terms such as measurement system and communication system can be replaced with each other.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementations in a certain embodiment may be arbitrarily combined. In addition, the various embodiments may be arbitrarily combined. For example, some or all steps of different embodiments may be arbitrarily combined, and a certain embodiment may be arbitrarily combined with the optional implementations of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in singular forms such as "a", "one", "the", "above", "said", "above-mentioned", and "this" may denote "one and only one", or "one or more", "at least one", and the like. For example, when using articles such as "a", "an" and "the" in English translation, nouns following the articles may be interpreted as singular or plural expressions.

In some embodiments, "a plurality of" may refer to two or more.

In some embodiments, terms such as "at least one of", "one or more", "a plurality of", and "multiple" may be replaced with one another.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives, such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives, such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "in response to...", "in response to determining that...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, an apparatus may be interpreted as physical or virtual, and its name is not limited to that recorded in the embodiments. Terms such as "apparatus", "equipment", "device", "circuit", "network element", "node", "function", "unit", "section", "system", "network", "chip", "chip system", "entity" and "subject" can be replaced with each other.

In some embodiments, "network" can be interpreted as apparatuses included in the network (for example, an access network device, a core network device, etc.).

In some embodiments, terms such as "Access Network Device (AN Device)", "Radio Access Network Device (RAN Device)", "Base Station (BS)", "Radio Base Station", "Fixed Station", "Node", "Access Point", "Transmission Point (TP)", "Reception Point (RP)", "Transmission/Reception Point (TRP)", "Panel", "Antenna Panel", "Antenna Array", "Cell", "Macro Cell", "Small Cell", "Femto Cell", "Pico Cell", "Sector", "Cell Group", "serving cell", "Carrier", "Component Carrier", and "Bandwidth Part (BWP)" can be replaced with each other.

In some embodiments, terms such as "Terminal", "Terminal Device", "User Equipment (UE)", "User Terminal", "Mobile Station (MS)", "Mobile Terminal (MT)", "Subscriber Station", "Mobile Unit", "Subscriber Unit", "Wireless Unit", "Remote Unit", "Mobile Device", "Wireless Device", "Wireless Communication Device", "Remote Device", "Mobile Subscriber Station", "Access Terminal", "Wireless Terminal", "Remote Terminal", "Handset", "User Agent", "Mobile Client", and "Client" can be replaced with each other.

In some embodiments, the access network device, the core network device or the network device can be replaced with a terminal. For example, the various embodiments of the present disclosure may also be applied to a structure where communication between the access network device, the core network device, or the network device and a terminal is replaced with communication between multiple terminals (e.g., device-to-device (D2D), vehicle-to-everything (V2X), etc.). In such cases, the terminal may also be configured to have a structure possessing all or part of the functions of the access network device. In addition, terms such as "uplink" and "downlink" can also be replaced with terms corresponding to communication between terminals, such as "sidelink". For example, an uplink channel, a downlink channel, and the like can be replaced with a sidelink channel or a direct link channel, and an uplink and a downlink can be replaced with a sidelink or a direct link.

In some embodiments, the terminal can be replaced with an access network device, a core network device or a network device. In this case, it may also be configured that the access network device, the core network device, or the network device has a structure with all or part of the functions possessed by the terminal.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as an independent embodiment, and any combination of any element, any row, or any column may also be implemented as an independent embodiment.

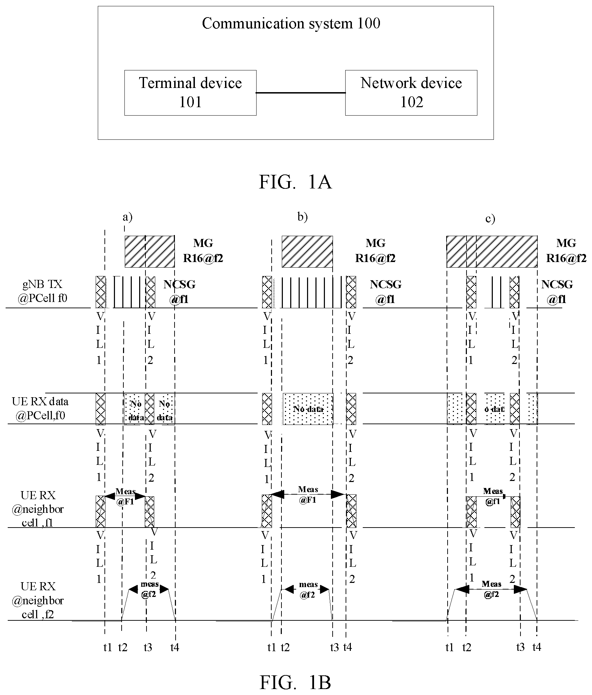

FIG. 1A is a schematic diagram of an architecture of a communication system according to an embodiment of the present disclosure. As shown in FIG. 1A, the communication system 100 may include a terminal device 101 and a network device 102.

In some embodiments, the terminal device 101 may include at least one of a mobile phone, a wearable device, an internet of things device, a vehicle with communication functions, a smart vehicle, a tablet computer (Pad), a computer with wireless transceiving function, a Virtual Reality (VR) terminal device, an Augmented Reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in smart city, and a wireless terminal device in smart home, but is not limited thereto.

In some embodiments, the network device 102 may include at least one of an access network device and a core network device.

In some embodiments, the access network device may be a node or device that accesses a terminal device into a wireless network. The access network device may include at least one of an evolved NodeB (eNB) in a 5G communication system, a next generation eNB (ng-eNB), a next generation NodeB (gNB), a node B (NB), a home Node B (HNB), a home evolved NodeB (HeNB), a wireless backhaul device, a Radio Network Controller (RNC), a Base Station Controller (BSC), a Base Transceiver Station (BTS), a Base Band Unit (BBU) in a 5G communication system, a base station in a 6G communication system, an Open RAN base station, a cloud base station (Cloud RAN), a base station in other communication systems, and an access node in a Wi-Fi system, but is not limited thereto.

In some embodiments, the technical solution of the present disclosure may be applicable to an Open RAN architecture. In this case, interfaces between access network devices or inside an access network device involved in the embodiments of the present disclosure may be changed to internal interfaces of Open RAN, and processes and information interaction between these internal interfaces may be implemented by software or programs.

In some embodiments, the access network device may be composed of a Central Unit (CU) and a Distributed Unit (DU), where the CU may also be referred to as a control unit. By adopting a CU-DU structure, the protocol layers of the access network device can be separated, with functions of some protocol layers placed in the CU for centralized control, and functions of the remaining or all protocol layers distributed in the DU, which is centrally controlled by the CU, but is not limited thereto.

In some embodiments, the core network device may be a single device, or multiple devices or a device group. The core network may include at least one of an Evolved Packet Core (EPC), a 5G Core Network (5GCN) and a Next Generation Core (NGC).

It should be understood that the communication system described in the embodiments of the present disclosure is intended to explain the technical solutions of the embodiments of the present disclosure more clearly, and does not constitute a limitation on the technical solutions provided in the embodiments of the present disclosure. Those of ordinary skill in the art will appreciate that with the evolution of system architectures and the emergence of new service scenarios, the technical solutions provided in the embodiments of the present disclosure are equally applicable to similar technical problems.

The following embodiments of the present disclosure may be applied to the communication system 100 shown in FIG. 1A, or a part of the entities thereof, but are not limited thereto. The entities shown in FIG. 1A are illustrative; the communication system may include all or part of the entities in FIG. 1A, or other entities outside FIG. 1A. The number and form of each entity are arbitrary, and each entity may be physical or virtual. The connection relationship between the entities is illustrative; the entities may be unconnected or connected in any manner, which may be direct connection, indirect connection, wired connection, or wireless connection.

The various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New Radio Access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN), Device-to-Device (D2D) system, Machine to Machine (M2M) system, Internet of Things (IoT) system, Vehicle-to-Everything (V2X), systems adopting other communication methods, and next-generation systems extended based on the above-mentioned. In addition, a combination of multiple systems (e.g., a combination of LTE or LTE-A with 5G) can also be applied.

In some embodiments of the present disclosure, when the terminal device supports a network controlled small gap (NCSG), the network device may configure multiple measurement gaps, where at least one measurement gap is an NCSG among the network controlled small gaps, and is configured by an RRC message according to protocol provisions.

In some embodiments, the term "gap" may also be referred to as "interval" or "gap".

In some embodiments, the terminal device shown in FIG. 1A is in a standalone (SA) operation mode.

In some embodiments, if the terminal device needs to identify and measure intra-frequency cells, and/or inter-frequency cells, and/or Radio Access Technology-Evolved Universal Terrestrial Radio Access Network (RAT E-UTRAN) cells by means of measurement gaps and/or NCSGs, and the terminal device supports [concurrentNCSGPerUE-OnlyMeasGapwithNCSG-r18] but does not support an independent measurement gap pattern for different frequency ranges, to enable the requirements set forth below to take effect, the network may provide a maximum of two NCSG patterns for each terminal device, or provide one measurement gap and one NCSG pattern for each terminal device for monitoring all frequency layers. Therein, concurrentNCSGPerUE indicates that concurrent NCSG configuration is allowed for each terminal device at the same time, and OnlyMeasGapwithNCSG-r18 indicates that NCSG can only be configured during an MG, and this feature is Release 18 (r18).

In some embodiments, if the terminal device needs to identify and measure intra-frequency cells, and/or inter-frequency cells, and/or inter-RAT E-UTRAN cells through measurement gaps and/or NCSGs, and the UE supports [concurrentNCSGPerUE-PerFRCombMeasGapwithNCSG-r18] and the independent measurement gap pattern for different frequency ranges, to enable the defined requirements for concurrent measurement gaps with NCSG to take effect, the network device may provide specified combinations of measurement gaps and NCSG patterns for monitoring all frequency layers. PerFRCombMeasGapwithNCSG-r18 indicates that the configuration is a combination of a measurement gap (MeasGap) and an NCSG for each frequency combination (PerFRComb).

In some embodiments, when an NCSG and other legacy measurement gaps are configured simultaneously within concurrent measurement gaps, there are at least the following scenarios.

The starting points/ending points of the two measurement gaps are interleaved.

A legacy measurement gap (Type2-MG) can be completely contained within the NCSG.

An NCSG can be completely contained within a legacy measurement gap (Type2-MG).

FIG. 1B is a schematic diagram of a measurement gap according to an embodiment of the present disclosure. As shown in FIG. 1B, in a), the starting point of a legacy measurement gap (MG) is interleaved with the NCSG, and the ending point of the NCSG is interleaved with the legacy measurement gap (MG); in b), the legacy measurement gap (MG) is completely contained within the NCSG; in c), the NCSG is completely contained within the legacy measurement gap (MG). NCSG @f1 represents an NCSG configured for measurement on the frequency f1; MG R16@f2 represents an MG configured for measurement on the frequency f2; gNB TX @PCell f0 represents a transmission operation performed by the network device on a serving cell at frequency f0; UE RX data @PCell, f0 represents that the terminal device receives data through the serving cell at frequency f0; UE RX @neighbor cell, f1 represents a reception operation of the terminal device on a neighboring cell at frequency f1; and UE RX @neighbor cell, f2 represents a reception operation of the terminal device on a neighboring cell at frequency f2.

For a), the terminal device may perform measurement on the carrier (f1) starting from t1. Since the terminal device supports NCSG for the "f0+f1" frequency band combination, the terminal device can also receive data on the PCell (f0) during the period from t1 to t3. Therefore, when the terminal device needs to perform measurement on another carrier (f2) starting from t2, the terminal device needs to discard the measurement based on [t1, t2] according to one of the Release 17 rules. However, if the terminal device also supports simultaneous multiple RF chain operation on f1 and f2 (for example, the terminal device supports the NCSG function), the terminal device may retune its available RF chain used for data reception during [t1, t2] to f2, so as to perform measurement on both f1 and f2. For b) and c), similar to scenario a), in a case where concurrent MGs with one NCSG are configured, parallel measurement can be implemented on multiple overlapping concurrent measurement gaps.

In some embodiments, when multiple parallel measurements are performed in concurrent measurement gaps, resource scheduling may affect measurement of the serving cell, and further affect network performance. Therefore, how to control resource scheduling while performing multiple parallel measurements in concurrent measurement gaps has become an urgent problem to be solved.

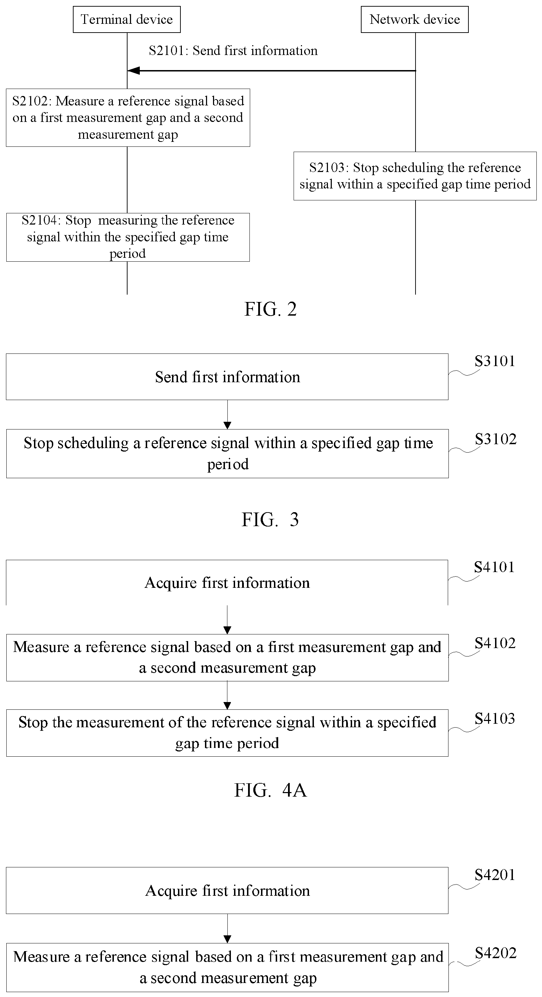

FIG. 2 is a schematic interaction diagram of a measurement method according to an embodiment of the present disclosure. The method can be executed by the above-mentioned communication system. As shown in FIG. 2, the method can include the following steps.

In **step S2101**, a network device sends first information to a terminal device.

In some embodiments, the terminal device can receive the first information. For example, the terminal device can receive the first information sent by the network device. For another example, the terminal device can also receive the first information sent by other entities.

In some embodiments, the first information is used to configure a first measurement gap and a second measurement gap corresponding to a reference signal for the terminal device.

In some embodiments, the type of the first measurement gap is different from the type of the second measurement gap.

In some embodiments, the first measurement gap can be a network controlled small gap (NCSG), and the second measurement gap can be a legacy measurement gap.

In some embodiments, the legacy measurement gap can be a measurement gap defined in 3GPP Release 16 and Release 17.

In some embodiments, the first measurement gap and the second measurement gap have an overlapping time period.

In some embodiments, the first measurement gap and the second measurement gap having an overlapping time period includes at least one of the following:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

As shown in FIG. 1B, NCSG@f1 denotes the first measurement gap, and MG R16@f2 denotes the second measurement gap, where a) a partial time period of the first measurement gap is overlapped with a partial time period of the second measurement gap, with the overlapping time period ranging from t2~t3; b) the first measurement gap contains the second measurement gap and the duration of the first measurement gap is greater than the duration of the second measurement gap, with the overlapping time period being the second measurement gap; c) the second measurement gap contains the first measurement gap and the duration of the second measurement gap is greater than the duration of the first measurement gap, with the overlapping time period being the first measurement gap.

In some embodiments, the name of the first information is not limited, and may be, for example, "measurement gap information", "measurement gap indication information", or "measurement indication information".

In some embodiments, a frequency corresponding to the first measurement gap is different from a frequency corresponding to the second measurement gap.

Taking FIG. 1B as an example, the frequency corresponding to the first measurement gap is f1, and the frequency corresponding to the second measurement gap is f2.

In some embodiments, the first measurement gap and the second measurement gap are used for neighboring cell measurement.

As shown in FIG. 1B, the first measurement gap can be used for measuring a neighboring cell at frequency f1, and the second measurement gap can be used for measuring a neighboring cell at frequency f2.

In some embodiments, a frequency of the serving cell where the terminal device is located is different from a frequency of the neighboring cell.

As shown in FIG. 1B, the frequency of the serving cell is f0, and the frequency of the neighboring cell is f1 or f2.

In some embodiments, the terminal device can operate in a standalone (SA) operation mode.

In **step S2102**, the terminal device measures a reference signal based on a first measurement gap and a second measurement gap.

In some embodiments, the reference signal may also be referred to as a "reference measurement signal", which is not limited by the embodiments of the present disclosure.

In some embodiments, the reference signal includes at least one of the following:
a Synchronization Signal Block (SSB);
a Channel State Information Reference Signal (CSI-RS); and
a Positioning Reference Signal (PRS).

In some embodiments, the reference signal can include a first reference signal and a second reference signal. The first reference signal is a reference signal corresponding to the first measurement gap, and the second reference signal is a reference signal corresponding to the second measurement gap.

In some embodiments, the terminal device can measure the first reference signal in a first time period, where the first time period includes a time period in the first measurement gap excluding the overlapping time period; the second reference signal is measured in a second time period, where the second time period includes a time period in the second measurement gap excluding the overlapping time period; and the first reference signal and the second reference signal are measured in parallel during the overlapping time period.

It should be noted that the sequence in which the terminal device measures the first reference signal and the second reference signal can be determined according to the sequence of the first time period, the second time period and the overlapping time period. For example, the terminal device can first measure the first reference signal, first measure the second reference signal, or first measure the first reference signal and the second reference signal in parallel, which is not limited by the embodiments of the present disclosure.

It should also be noted that if the duration of the first time period or the second time period is zero, it means that the corresponding separate measurement is not performed. For example, if the first time period is zero, the first reference signal is not measured separately; if the second time period is zero, the second reference signal is not measured separately.

Taking a) in FIG. 1B as an example, the first time period is t1~t2, the second time period is t3~t4, and the overlapping time period is t2~t3. The terminal device measures the first reference signal during t1~t2, measures the first reference signal and the second reference signal in parallel during t2~t3, and measures the second reference signal during t3~t4.

Taking b) in FIG. 1B as an example, the first time period is t1~t2 and t3~t4, and the overlapping time period is t2~t3. The terminal device measures the first reference signal during t1~t2, measures the first reference signal and the second reference signal in parallel during t2~t3, and measures the first reference signal during t3~t4. The second time period is zero, which means the terminal device does not measure the second reference signal separately.

Taking c) in FIG. 1B as an example, the overlapping time period is t2~t3, and the second time period is t1~t2 and t3~t4. The terminal device measures the second reference signal during t1~t2, measures the first reference signal and the second reference signal in parallel during t2~t3, and measures the second reference signal during t3~t4. The first time period is zero, which means the terminal device does not measure the first reference signal separately.

In some embodiments, the terminal device can measure the reference signal with reference to provisions of existing protocols, which will not be repeated herein.

In **step S2103**, the network device stops scheduling the reference signal within a specified gap time period.

In some embodiments, the specified gap time period includes a time period for performing a radio frequency operation in the overlapping time period.

In some embodiments, the radio frequency operation can include radio frequency retuning.

In some embodiments, the radio frequency retuning can also be referred to as "radio frequency tuning".

In some embodiments, the radio frequency operation can further include other operations besides the radio frequency retuning, for example, operations other than the radio frequency retuning specified by protocols, which are not limited in the embodiments of the present disclosure.

Taking case a) in FIG. 1B as an example, the specified time period is a time period corresponding to VIL2; taking case b) in FIG. 1B as an example, the specified time period is a time period starting from t3 until the terminal device retunes to other carriers; taking case c) in FIG. 1B as an example, the specified time period includes a time period corresponding to VIL1 and a time period corresponding to VIL2.

In some embodiments, "scheduling" can be interpreted as "indicating the measurement time and measurement mode of the reference signal".

In some embodiments, when a partial time period of the first measurement gap is overlapped with a partial time period of the second measurement gap, scheduling of the second reference signal is stopped within the specified gap time period. The specified gap time period is a time period of the second measurement gap overlapping with a first visible interruption length (VIL), and the first VIL is a time period for performing the radio frequency operation in the first measurement gap.

As shown in case a) of FIG. 1B, the first measurement gap and the second measurement gap are overlapped from t2~t3. The time periods for performing the radio frequency operation in the first measurement gap include VIL1 and VIL2, that is, the first VIL includes VIL1 and VIL2. The time period of the second measurement gap overlapping with the first VIL is VIL2, and the specified time period is VIL2. The terminal device can retune to other carriers during VIL2. Correspondingly, the network device can stop scheduling the second reference signal within the time period corresponding to VIL2. In this way, interference to the measurement of the second reference signal on the carrier at f2 can be avoided.

In some embodiments, when the first measurement gap contains the second measurement gap and the duration of the first measurement gap is greater than the duration of the second measurement gap, scheduling of the first reference signal is stopped within the specified gap time period. The specified gap time period is a time period of the first measurement gap overlapping with a third time period, and the third time period is a time period for performing the radio frequency operation in the second measurement gap.

As shown in case b) of FIG. 1B, the first measurement gap contains the second measurement gap. After the terminal device completes the measurement of the second reference signal at time t3, it can retune to other carriers. Correspondingly, the network device can stop scheduling the first reference signal during the retuning time period of the terminal device. In this way, interference to the measurement of the first reference signal on the carrier at f1 can be avoided.

In some embodiments, when the second measurement gap contains the first measurement gap and the duration of the second measurement gap is greater than the duration of the first measurement gap, scheduling of the second reference signal is stopped within the specified gap time period; the specified gap time period includes a first VIL, and the first VIL is a time period for performing the radio frequency operation in the first measurement gap.

As shown in case c) of FIG. 1B, the second measurement gap contains the first measurement gap. The time periods for performing the radio frequency operation in the first measurement gap include VIL1 and VIL2, that is, the first VIL includes VIL1 and VIL2. The time periods of the second measurement gap overlapping with the first VIL are VIL1 and VIL2, and the specified time period is VIL1 and VIL2. The terminal device can retune to f1 during VIL1 and retune to other carriers during VIL2. Correspondingly, the network device can stop scheduling the second reference signal within the time periods corresponding to VIL1 and VIL2. In this way, interference to the measurement of the second reference signal on the carrier of f2 can be avoided.

In **step S2104**, the terminal device stops measuring the reference signal within the specified gap time period.

In some embodiments, when a partial time period of the first measurement gap is overlapped with a partial time period of the second measurement gap, the measurement of the second reference signal is stopped within the specified gap time period; the specified gap time period is a time period of the second measurement gap overlapping with a first visible interruption length (VIL), and the first VIL is a time period for performing the radio frequency operation in the first measurement gap.

As shown in case a) of FIG. 1B, the first measurement gap and the second measurement gap are overlapped during t2~t3. The time periods for performing the radio frequency operation in the first measurement gap include VIL1 and VIL2, that is, the first VIL includes VIL1 and VIL2. The time period in the second measurement gap overlapping with the first VIL is VIL2, and the specified time period is VIL2. The terminal device can retune to other carriers during VIL2. Correspondingly, the terminal device can stop measuring the second reference signal within the time period corresponding to VIL2. In this way, measurement of the second reference signal on the carrier of f2 is stopped in the presence of interference, and measurement accuracy is improved.

In some embodiments, when the first measurement gap contains the second measurement gap and the duration of the first measurement gap is greater than the duration of the second measurement gap, the measurement of the first reference signal is stopped within the specified gap time period; the specified gap time period is a time period of the first measurement gap overlapping with a third time period, and the third time period is a time period for performing the radio frequency operation in the second measurement gap.

As shown in case b) of FIG. 1B, the first measurement gap contains the second measurement gap. After the terminal device completes the measurement of the second reference signal at time t3, it can retune to other carriers. Correspondingly, the terminal device can stop measuring the first reference signal during the retuning time period. In this way, measurement of the first reference signal on the carrier of f1 is stopped in the presence of interference, and measurement accuracy is improved.

In some embodiments, when the second measurement gap contains the first measurement gap and the duration of the second measurement gap is greater than the duration of the first measurement gap, the measurement of the second reference signal is stopped within the specified gap time period; the specified gap time period includes a first VIL, and the first VIL is a time period for performing the radio frequency operation in the first measurement gap.

As shown in case c) of FIG. 1B, the second measurement gap contains the first measurement gap. The time periods for performing the radio frequency operation in the first measurement gap include VIL1 and VIL2, that is, the first VIL includes VIL1 and VIL2. The time periods of the second measurement gap overlapping with the first VIL are VIL1 and VIL2, and the specified time period is VIL1 and VIL2. The terminal device can retune to f1 during VIL1 and retune to other carriers during VIL2. Correspondingly, the terminal device can stop measuring the second reference signal within the time periods corresponding to VIL1 and VIL2. In this way, measurement of the second reference signal on the carrier of f2 is stopped in the presence of interference, and measurement accuracy is improved.

In some embodiments, in NR Standalone operation (using a single carrier or NR CA), for each VIL, the number of interrupted slots of the per-UE NCSG configured on all serving cells or the FR1 NCSG configured on FR1 serving cells is shown in Table 1.

**Table 1**

| NR | Number of interrupted slots on serving cells |
|---|---|
| Subcarrier Spacing (SCS) (kHz) | When MG timing advance of 0ms is applied |
| | VIL=1ms |
| 15 | 1 |
| 30 | 2 |
| 60 | 4 |
| 120 | 8 |
| NOTE: NR SCS of 120 kHz is only applicable to the case with per-UE NCSG | |

In some embodiments, in NR Standalone operation (using a single carrier or NR CA), during each VIL, the number of interrupted slots on FR2 serving cells for FR2 NCSG is shown in Table 2.

**Table 2**

| NR SCS | Number of interrupted slots on serving cells | |
|---|---|---|
| | When MG timing advance of 0ms is applied | When MG timing advance of 0.75ms is applied |
| (kHz) | VIL=0.75ms | VIL=0.75ms |
| 60 | 3 | 3 |
| 120 | 6 | 6 |

In some embodiments, when the second measurement gap contains the first measurement gap and the duration of the second measurement gap is greater than the duration of the first measurement gap, the first measurement gap is not allowed to introduce interruptions. In this way, the measurement efficiency of the terminal device can be improved.

By adopting the above method, the network device can control scheduling of the reference signal in the overlapping time period for the radio frequency operation, so as to avoid the impact on the measurement of the serving cell during parallel measurement of NCSG and legacy measurement gaps, and thus improve network performance. Further, the terminal device may also stop corresponding measurement in the overlapping time period for the radio frequency operation, so as to improve measurement accuracy.

The method involved in the embodiments of the present disclosure may include at least one of the above-mentioned steps S2101 to S2104. For example, step S2101 may be implemented as an independent embodiment, step S2102 may be implemented as an independent embodiment, steps S2101+S2102 may be implemented as an independent embodiment, steps S2102+S2103 may be implemented as an independent embodiment, steps S2103+S2104 may be implemented as an independent embodiment, steps S2101+S2102+S2103 may be implemented as an independent embodiment, and steps S2102+S2103+S2104 may be implemented as an independent embodiment.

In some embodiments, the sequence of the above-mentioned steps S2101 to S2104 can be exchanged or the steps can be executed simultaneously.

In some embodiments, the above-mentioned steps S2101 to S2104 are all optional steps.

In some embodiments, reference can be made to other optional implementations recorded before or after the specification corresponding to FIG. 2.

In some embodiments, the names of information and the like are not limited to the names recorded in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip" and the like can be interchanged with each other.

In some embodiments, terms such as "acquiring", "obtaining", "getting", "receiving", "transmitting", "bidirectional transmitting", and "sending and/or receiving" can be replaced with each other, which may be interpreted as receiving from other entities, acquiring from a protocol, acquiring from a higher layer, obtaining by self-processing, implementing autonomously and other multiple meanings.

In some embodiments, terms such as "sending", "transmitting", "reporting", "delivering", "transmitting", "bidirectional transmitting", "sending and/or receiving" can be replaced with each other.

In some embodiments, terms such as "certain", "preseted", "preset", "set", "indicated", "a certain", "any", "first" and the like can be interchanged with each other. "Certain A", "preseted A", "preset A", "set A", "indicated A", "a certain A", "any A", "first A" can be interpreted as A pre-specified in a protocol or the like, or A obtained through setting, configuration, or indication, or specific A, a certain A, any A, or first A, etc., but is not limited thereto.

FIG. 3 is a flowchart of a measurement method according to an embodiment of the present disclosure. As shown in FIG. 3, the measurement method provided in the embodiments of the present disclosure can be performed by a network device. The method includes the following steps.

In **step S3101**, first information is sent.

For optional implementations of step S3101, reference can be made to optional implementations of step S2101 in FIG. 2 and other relevant parts in the embodiments related to FIG. 2, which will not be repeated herein.

In some embodiments, the network device can send the first information to a terminal device, but is not limited thereto, and the network device can also send the first information to other entities.

In **step S3102**, scheduling of a reference signal is stopped within a specified gap time period.

For optional implementations of step S3102, reference can be made to optional implementations of step S2103 in FIG. 2 and other relevant parts in the embodiments related to FIG. 2, which will not be repeated herein.

In some embodiments, the first measurement gap and the second measurement gap having the overlapping time period includes at least one of the following:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

In some embodiments, the reference signal includes a first reference signal and a second reference signal, the first reference signal is a reference signal corresponding to the first measurement gap, and the second reference signal is a reference signal corresponding to the second measurement gap.

The first information is used for the terminal device to measure the first reference signal in a first time period, measure the second reference signal in a second time period, and measure the first reference signal and the second reference signal in parallel in the overlapping time period. The first time period includes a time period of the first measurement gap excluding the overlapping time period, and the second time period includes a time period of the second measurement gap excluding the overlapping time period.

In some embodiments, stopping scheduling the reference signal within the specified gap time period includes:
when a partial time period of the first measurement gap is overlapped with a partial time period of the second measurement gap, stopping scheduling the second reference signal within the specified gap time period, where the specified gap time period is a time period of the second measurement gap overlapping with a first visible interruption length (VIL), and the first VIL is a time period for performing the radio frequency operation in the first measurement gap.

In some embodiments, stopping scheduling the reference signal within the specified gap time period includes:
when the first measurement gap contains the second measurement gap and the duration of the first measurement gap is greater than the duration of the second measurement gap, stopping scheduling the first reference signal within the specified gap time period, where the specified gap time period is a time period of the first measurement gap overlapping with a third time period, and the third time period is a time period for performing the radio frequency operation in the second measurement gap.

In some embodiments, stopping scheduling the reference signal within the specified gap time period includes:
when the second measurement gap contains the first measurement gap and the duration of the second measurement gap is greater than the duration of the first measurement gap, stopping scheduling the second reference signal within the specified gap time period, where the specified gap time period includes a first VIL, and the first VIL is a time period for performing the radio frequency operation in the first measurement gap.

In some embodiments, the reference signal includes at least one of the following:
a Synchronization Signal Block (SSB);
a Channel State Information Reference Signal (CSI-RS); and
a Positioning Reference Signal (PRS).

In some embodiments, a frequency corresponding to the first measurement gap is different from a frequency corresponding to the second measurement gap.

In some embodiments, the first measurement gap and the second measurement gap are used for neighboring cell measurement.

In some embodiments, a frequency of a serving cell where the terminal device is located is different from a frequency of the neighboring cell.

In some embodiments, the terminal device is in a standalone (SA) operation mode.

FIG. 4A is a flowchart of a measurement method according to an embodiment of the present disclosure. As shown in FIG. 4A, the measurement method involved in the embodiments of the present disclosure can be performed by a terminal device. The method includes the following steps.

In **step S4101**, first information is acquired.

For optional implementations of step S4101, reference can be made to optional implementations of step S2101 in FIG. 2 and other relevant parts in the embodiments related to FIG. 2, which will not be repeated herein.

In some embodiments, the terminal device can receive the first information sent by a network device, but is not limited thereto, and the terminal device can also receive the first information sent by other entities.

In some embodiments, the terminal device can acquire the first information specified by a protocol.

In some embodiments, the terminal device can acquire the first information from an upper layer(s).

In some embodiments, the terminal device can perform processing to obtain the first information.

In some embodiments, the step S4101 may be omitted, the terminal device can autonomously implement the function indicated by the first information, or the above-mentioned functions may be preset or default.

In **step S4102**, a reference signal is measured based on a first measurement gap and a second measurement gap.

For optional implementations of step S4102, reference can be made to optional implementations of step S2102 in FIG. 2 and other relevant parts in the embodiments related to FIG. 2, which will not be repeated herein.

In **step S4103**, the measurement of the reference signal is stopped within a specified gap time period.

For optional implementations of step S4103, reference can be made to optional implementations of step S2104 in FIG. 2 and other relevant parts in the embodiments related to FIG. 2, which will not be repeated herein.

The method involved in the embodiments of the present disclosure may include at least one of the above-mentioned steps S4101 to S4103. For example, step S4101 may be implemented as an independent embodiment, step S4102 may be implemented as an independent embodiment, step S4103 may be implemented as an independent embodiment, steps S4101+S4102 may be implemented as an independent embodiment, and steps S4102+S4103 may be implemented as an independent embodiment, but is not limited thereto.

In some embodiments, the sequence of the above-mentioned steps S4101 to S4103 can be exchanged or the steps can be executed simultaneously.

In some embodiments, the above-mentioned steps S4101 to S4103 are all optional steps.

FIG. 4B is a flowchart of a measurement method according to an embodiment of the present disclosure. As shown in FIG. 4B, the measurement method involved in the embodiments of the present disclosure can be performed by a terminal device. The method includes the following steps.

In **step S4201**, first information is acquired.

For optional implementations of step S4201, reference can be made to optional implementations of step S2101 in FIG. 2, step S4101 in FIG. 4A, and other relevant parts in the embodiments related to FIG. 2 and FIG. 4A, which will not be repeated herein.

In **step S4202**, a reference signal is measured based on a first measurement gap and a second measurement gap.

For optional implementations of step S4202, reference can be made to optional implementations of step S2102 in FIG. 2, step S4102 in FIG. 4A, and other relevant parts in the embodiments related to FIG. 2 and FIG. 4A, which will not be repeated herein.

In some embodiments, the first measurement gap and the second measurement gap having the overlapping time period includes at least one of the following:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

In some embodiments, the reference signal includes a first reference signal and a second reference signal, the first reference signal is a reference signal corresponding to the first measurement gap, and the second reference signal is a reference signal corresponding to the second measurement gap; measuring the reference signal according to the first measurement gap and the second measurement gap includes:
measuring the first reference signal in a first time period, where the first time period includes a time period in the first measurement gap excluding the overlapping time period;
measuring the second reference signal in a second time period, where the second time period includes a time period in the second measurement gap excluding the overlapping time period; and
measuring the first reference signal and the second reference signal in parallel in the overlapping time period.

In some embodiments, the method further includes:
stopping measuring the reference signal within the specified gap time period.

In some embodiments, stopping measuring the reference signal within the specified gap time period includes:
when a partial time period of the first measurement gap is overlapped with a partial time period of the second measurement gap, stopping measuring the second reference signal within the specified gap time period, where the specified gap time period is a time period of the second measurement gap overlapping with a first visible interruption length (VIL), and the first VIL is a time period for performing the radio frequency operation in the first measurement gap.

In some embodiments, stopping measuring the reference signal within the specified gap time period includes:
when the first measurement gap contains the second measurement gap and a duration of the first measurement gap is greater than a duration of the second measurement gap, stopping measuring the first reference signal within the specified gap time period, where the specified gap time period is a time period in the first measurement gap that is overlapped with a third time period, and the third time period is a time period for performing the radio frequency operation in the second measurement gap.

In some embodiments, stopping measuring the reference signal within the specified gap time period includes:
when the second measurement gap contains the first measurement gap and the duration of the second measurement gap is greater than the duration of the first measurement gap, stopping measuring the second reference signal within the specified gap time period, where the specified gap time period includes a first VIL, and the first VIL is a time period for performing the radio frequency operation in the first measurement gap.

In some embodiments, the method includes:
determining that the second measurement gap contains the first measurement gap and the duration of the second measurement gap is greater than the duration of the first measurement gap, and not allowing an interruption to be introduced by the first measurement gap.

In some embodiments, the reference signal includes at least one of the following:
a Synchronization Signal Block (SSB);
a Channel State Information Reference Signal (CSI-RS); and
a Positioning Reference Signal (PRS).

In some embodiments, a frequency corresponding to the first measurement gap is different from a frequency corresponding to the second measurement gap.

In some embodiments, the first measurement gap and the second measurement gap are used for measuring a neighboring cell.

In some embodiments, a frequency of a serving cell where the terminal device is located is different from a frequency of the neighboring cell.

In some embodiments, the terminal device the terminal device is in a standalone (SA) operation mode.

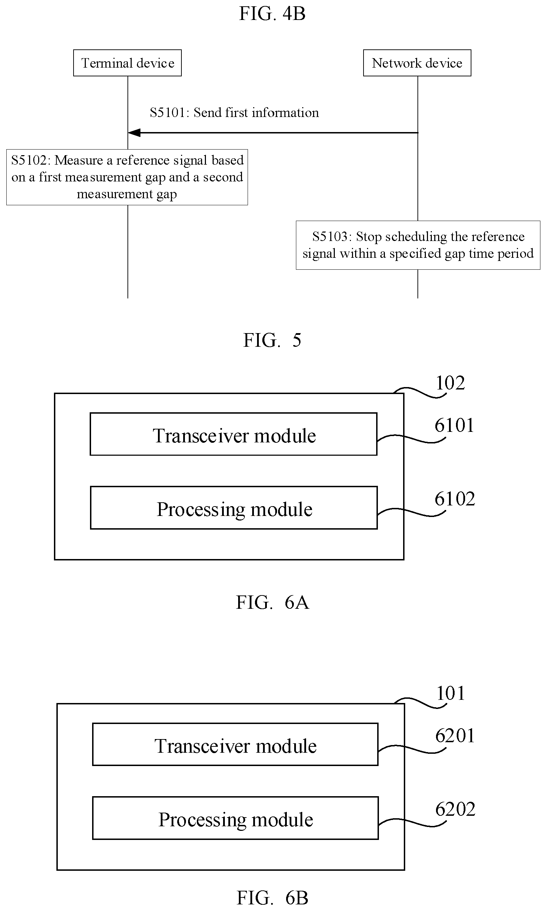

FIG. 5 is a schematic interaction diagram of a measurement method according to an embodiment of the present disclosure. As shown in FIG. 5, the measurement method can be performed by a communication system, and the method includes the following steps.

In **step S5101**, a network device sends first information to a terminal device.

For optional implementations of step S5101, reference can be made to optional implementations of step S2101 in FIG. 2, step S3101 in FIG. 3 and step S4101 in FIG. 4A, as well as other relevant parts in the embodiments involved in FIG. 2, FIG. 3 and FIG. 4A, which will not be repeated herein.

In **step S5102**, the terminal device measures a reference signal based on a first measurement gap and a second measurement gap.

For optional implementations of step S5102, reference can be made to optional implementations of step S2102 in FIG. 2 and step S4102 in FIG. 4A, as well as other relevant parts in the embodiments involved in FIG. 2 and FIG. 4A, which will not be repeated herein.

In **step S5103**, the network device stops scheduling the reference signal within a specified gap time period.

For optional implementations of step S5103, reference can be made to optional implementations of step S2103 in FIG. 2 and step S3102 in FIG. 3, as well as other relevant parts in the embodiments involved in FIG. 2 and FIG. 3, which will not be repeated herein.

In some embodiments, the above-mentioned method may adopt the methods described in the embodiments of the above communication system, terminal device and network device, which will not be repeated herein.

In some embodiments, for a) in FIG. 1B, when the UE retunes to other carriers during VIL2 of NCSG, interference exists on the SSB of measurement objects on carrier at f2 (MOs@f2). Therefore, scheduling resource restrictions shall be imposed on the measurement reference signal of MOs@f2 (such as SSB/CSI-RS/PRS).

In some embodiments, for b) in FIG. 1B, when the UE retunes to other carriers during the legacy measurement gap, interference also exists on the SSB of measurement objects on carrier at f1 (MOs@f1). Therefore, resource restrictions shall be imposed on the measurement reference signal of MOs@f1 (such as SSB/CSI-RS/PRS).

In some embodiments, scheduling availability is restricted if any of the following conditions are met; otherwise, no scheduling restriction is applied. It can be explained that the NCSG scheduling restrictions specified in existing protocols are not applicable to the embodiments of the present disclosure. It should be noted that if the union of SSB-ToMeasure of all configured measurement objects on the same serving carrier is configured, the SSB symbols therein can be merged; otherwise, all L SSB symbols within the duration of Synchronization Signal Measurement Timing Configuration (SMTC) window defined in clause 4.1 of TS 38.213 are included.

The requirements in clause 9.3.10.3.3 based on deriveSSB-IndexFromCell-inter are applicable when the UE supports ncsg-SymbolLevelScheduleRestrictionInter-r17. If the UE does not support ncsg-SymbolLevelScheduleRestrictionInter-r17, the requirements in clause 9.3.10.3.3 apply on the assumption that deriveSSB-IndexFromCell-inter is not enabled.

In some embodiments, for a UE that supports parallel measurement using both an NCSG and a legacy Rel16/R17 measurement gap within concurrent gaps ([parallelNCSGAndMG] [14]), when the target inter-frequency layer is measured by either of gaps, the following restrictions apply to the measurement of Sync Signal-Reference Signal Received Power/Reference Signal Received Quality/Reference Signal Interference Noise Ratio (SS-RSRP/RSRQ/SINR).
(1) The UE is not expected to measure SSB/CSI-RS/PRS on cells or carriers measured by the legacy measurement gap during the period when the VIL of NCSG is overlapped with the Measurement Gap Length (MGL) of the legacy measurement gap.
(2) During the retuning time period of the legacy measurement gap, if this time period is fully overlapped with the duration of NCSG, it is not expected that the UE measures SSB/CSI-RS/PRS of the cells/carriers under the measurement responsibility of NCSG within this time period.

In some embodiments, for c), when RF1 of the UE retunes to other carriers (such as f1) during the legacy measurement gap, the serving gNB does not schedule any data. Thus, no interruption is caused to the serving gNB. However, certain scheduling restrictions shall be defined for SSB/CSI-RS/PRS of MOs@f2.

In some embodiments, when per-FR FR1 NCSG is configured for a UE supporting ncsg-MeasGapPerFR-r17, the number of interrupted slots on all serving cells is shown in Table 1. If per-FR FR2 NCSG is configured for a UE supporting ncsg-MeasGapPerFR-r17, the number of interrupted slots on FR2 serving cells is shown in Table 2. In NR standalone (using a single carrier or NR CA) operation, each NCSG has two interruptions, namely VIL1 before Measurement Length (ML) and VIL2 after ML. The number of interrupted slots for each interruption is detailed in Table 1 and Table 2.

It should be noted that the interruption requirements defined in Table 1 and Table 2 are not applicable when the legacy measurement gap is overlapped with the NCSG within the concurrent gap.

Table 1: in NR Standalone operation (using a single carrier or NR CA), for each VIL, the number of interrupted slots of per-UE NCSG configured on all serving cells or FR1 NCSG configured on FR1 serving cells.

Table 2: in NR Standalone operation (using a single carrier or NR CA), the number of interrupted slots of FR2 NCSG on FR2 serving cells during each VIL.

The above measurement method is described below in combination with specific embodiments.

Embodiment 1: a method for a UE to perform parallel measurement of NCSG and MG within concurrent gaps.

Embodiment 2: based on embodiment 1, scheduling restrictions should be applied to the measurement reference signal for one of the target inter-frequency layers to be measured.

Embodiment 3: based on embodiment 2, the UE is not expected to measure the union of SSB/CSI-RS/PRS of cells/carriers measured by a legacy measurement gap within the concurrent gaps.

Embodiment 4: based on embodiment 3, within the concurrent gaps, the VIL of the NCSG is fully overlapped with the MGL of the legacy measurement gap.

Embodiment 5: based on embodiment 2, the union of SSB/CSI-RS/PRS of cells or carriers measured by the NCSG within the concurrent gaps is measured.

Embodiment 6: based on embodiment 5, retuning time of the legacy measurement gap is fully overlapped with other NCSGs.

Embodiment 7: based on embodiment 1, interruptions caused by the NCSG are not applied.

Embodiment 8: based on embodiment 7, the duration of the NCSG within the concurrent gaps is fully contained in the MGL of the legacy measurement gap.

In some embodiments of the present disclosure, a communication system is provided. The communication system includes a terminal device and a network device. The terminal device is configured to perform the measurement method performed by the terminal device in the above-mentioned embodiments of the present disclosure. The network device is configured to perform the measurement method performed by the network device in the above-mentioned embodiments of the present disclosure.

The embodiments of the present disclosure further provide an apparatus for implementing any of the above methods. For example, an apparatus is provided that includes units or modules for implementing each step performed by the terminal in any of the above methods. For another example, another apparatus is provided that includes units or modules for implementing each step performed by a network device (e.g., an access network device, a core network functional node, a core network device, etc.) in any of the above methods.

It should be understood that the division of each unit or module in the above apparatus is only a division of logical functions. In actual implementation, all or part of them may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor is, for example, a general-purpose processor such as a Central Processing Unit (CPU) or a microprocessor, and the memory is a memory inside or outside the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the above hardware circuit is an Application-Specific Integrated Circuit (ASIC), and the functions of some or all of the above units or modules are implemented through the design of the logical relationship of components in the circuits; for another example, in another implementation, the above hardware circuits may be implemented through a Programmable Logic Device (PLD). Taking a Field Programmable Gate Array (FPGA) as an example, it may include a large number of logic gate circuits, and the connection relationship between the logic gate circuits is configured through a configuration file to implement the functions of some or all of the above units or modules. All units or modules of the above apparatus may be fully implemented in the form of a processor invoking software, or fully implemented in the form of hardware circuits, or partially implemented in the form of a processor invoking software and the remaining part implemented in the form of hardware circuits.

In the embodiments of the present disclosure, a processor is a circuit with signal processing capability. In one implementation, the processor may be a circuit with instruction reading and running capabilities, such as a Central Processing Unit (CPU), a microprocessor, a Graphics Processing Unit (GPU) (which may be understood as a microprocessor), or a Digital Signal Processor (DSP); in another implementation, the processor may implement certain functions through the logical relationship of hardware circuits, and the logical relationship of the hardware circuits is fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process in which the processor loads a configuration document to implement hardware circuit configuration may be understood as the process in which the processor loads instructions to implement the functions of some or all of the above units or modules. In addition, it may also be a hardware circuit designed for artificial intelligence, which may be understood as an ASIC, such as a Neural Network Processing Unit (NPU), a Tensor Processing Unit (TPU), a Deep Learning Processing Unit (DPU), etc.

FIG. 6A is a schematic structural diagram of a network device provided by an embodiment of the present disclosure. As shown in FIG. 6A, the network device 102 may include at least one of a transceiver module 6101, a processing module 6102, and the like. In some embodiments, the transceiver module 6101 is configured to send first information to a terminal device, where the first information is used to configure a first measurement gap and a second measurement gap for the terminal device, the first measurement gap is a network controlled small gap (NCSG), the second measurement gap is a legacy measurement gap, and an overlapping time period exists between the first measurement gap and the second measurement gap; the first information is used for the terminal device to measure a reference signal according to the first measurement gap and the second measurement gap. The processing module 6102 is configured to stop scheduling the reference signal within a specified gap time period, where the specified gap time period includes a time period for performing a radio frequency operation in the overlapping time period. Optionally, the transceiver module 6101 can be configured to perform at least one of communication steps such as sending and/or receiving performed by the network device 102 in any of the above methods (e.g., step S2101, but not limited thereto), which will not be repeated herein. Optionally, the processing module 6102 may be configured to perform at least one of other steps performed by the network device 102 in any of the above methods (e.g., step S2103, but not limited thereto), which will not be repeated herein.

In some embodiments, the transceiver module may include a sending module and/or a receiving module, and the sending module and the receiving module may be separated or integrated together. Optionally, the transceiver module may be replaced with a transceiver.

FIG. 6B is a schematic structural diagram of a terminal device provided by an embodiment of the present disclosure. As shown in FIG. 6B, the terminal device 101 can include at least one of a transceiver module 6201, a processing module 6202, and the like. In some embodiments, the transceiver module 6201 is configured to receive first information sent by a network device, where the first information is used to configure a first measurement gap and a second measurement gap for the terminal device, the first measurement gap is a network controlled small gap (NCSG), the second measurement gap is a legacy measurement gap, and the first measurement gap and the second measurement gap have an overlapping time period; the network device stops scheduling reference signal within a specified gap time period, and the specified gap time period includes a time period for performing a radio frequency operation in the overlapping time period. The processing module 6202 is configured to measure the reference signal according to the first measurement gap and the second measurement gap. Optionally, the transceiver module 6201 can be configured to perform at least one of communication steps such as sending and/or receiving performed by the terminal device 101 in any of the above methods (e.g., step S2101, but not limited thereto), which will not be repeated herein. Optionally, the processing module 6202 can be configured to perform at least one of other steps performed by the terminal device 101 in any of the above methods (e.g., step S2104, but not limited thereto), which will not be repeated herein.

In some embodiments, the transceiver module may include a sending module and/or a receiving module, and the sending module and the receiving module may be separated or integrated together. Optionally, the transceiver module may be replaced with a transceiver.

In some embodiments, the processing module may be a single module or include a plurality of sub-modules. Optionally, the plurality of sub-modules are respectively configured to perform all or part of the steps required to be performed by the processing module. Optionally, the processing module may be replaced with a processor.

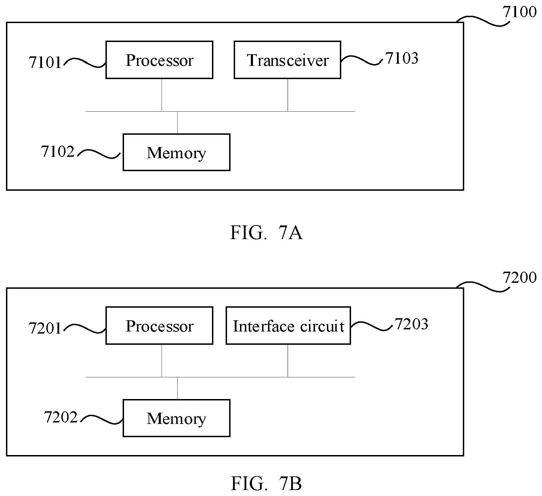

FIG. 7A is a schematic structural diagram of a communication device provided by an embodiment of the present disclosure. The communication device 7100 may be a network device (e.g., an access network device, a core network device, etc.), a terminal (e.g., a user equipment, etc.), a chip, a chip system, or a processor, etc., supporting the first device in implementing any of the above methods, or a chip, a chip system, or a processor, etc., supporting the terminal in implementing any of the above methods. The communication device 7100 may be used to implement the methods described in the above method embodiments; for details, reference may be made to the descriptions in the above method embodiments.

As shown in FIG. 7A, the communication device 7100 includes one or more processors 7101. The processor 7101 may be a general-purpose processor or a dedicated processor, such as a baseband processor or a central processing unit. The baseband processor may be used to process communication protocols and communication data, and the central processing unit may be used to control a communication apparatus (e.g., a base station, a baseband chip, an Internet of Things device, an IoT device chip, a DU or a CU, etc.), execute programs, and process data of the programs. The communication device 7100 is used to perform any of the above methods.

In some embodiments, the communication device 7100 further includes one or more memories 7102 for storing instructions. Optionally, all or part of the memories 7102 may also be arranged outside the communication device 7100.

In some embodiments, the communication device 7100 further includes one or more transceivers 7103. When the communication device 7100 includes one or more transceivers 7103, the transceiver 7103 performs at least one of communication steps such as sending and/or receiving in the above methods (e.g., step S2101, step S4101, but not limited thereto), and the processor 7101 performs at least one of other steps (e.g., step S2102, but not limited thereto).

In some embodiments, a transceiver may include a receiver and/or a transmitter, and the receiver and the transmitter may be separate or integrated together. Optionally, terms such as transceiver, transceiving unit, transceiver machine, transceiving circuit and the like can be interchanged with each other, terms such as transmitter, transmitting unit, transmitter machine, transmitting circuit and the like can be interchanged with each other, and terms such as receiver, receiving unit, receiver machine, receiving circuit and the like can be interchanged with each other.

In some embodiments, the communication device 7100 may include one or more interface circuits. Optionally, the interface circuit is connected to the memory 7102, and the interface circuit may be configured to receive signals from the memory 7102 or other apparatuses, and may be configured to send signals to the memory 7102 or other apparatuses. For example, the interface circuit may read instructions stored in the memory 7102 and send the instructions to the processor 7101.

The communication device 7100 in the descriptions of the above embodiments may be a first device or an Internet of Things (IoT) device, but the scope of the communication device 7100 described in the present disclosure is not limited thereto, and the structure of the communication device 7100 may not be limited by FIG. 7A. The communication device may be an independent device or may be a part of a larger device. For example, the communication device may be: (1) an independent integrated circuit (IC), or a chip, or a chip system or subsystem; (2) a set of one or more ICs, and optionally, the set of ICs may also include storage components for storing data and programs; (3) an application-specific integrated circuit (ASIC), such as a modem; (4) a module that can be embedded in other devices; (5) a receiver, an IoT device, a smart IoT device, a cellular phone, a wireless device, a handheld device, a mobile unit, a vehicle-mounted device, a first device, a cloud device, an artificial intelligence (AI) device, and the like; (6) others, and the like.

FIG. 7B is a schematic structural diagram of a chip provided by an embodiment of the present disclosure. For a case where the communication device may be implemented as a chip or a chip system, reference may be made to the schematic structural diagram of the chip 7200 shown in FIG. 7B, which is not limited thereto.

The chip 7200 includes one or more processors 7201, and the chip 7200 is configured to perform any of the above methods.

In some embodiments, the chip 7200 further includes one or more interface circuits 7203. Optionally, the interface circuit 7203 is connected to the memory 7202, and the interface circuit 7203 can be used to receive signals from the memory 7202 or other apparatuses, and can be used to send signals to the memory 7202 or other apparatuses. For example, the interface circuit may read instructions stored in the memory 7202 and send the instructions to the processor 7201.

In some embodiments, the interface circuit 7203 performs at least one of the communication steps such as sending and/or receiving in any of the above methods (for example, step S2101 and step S4101, but not limited thereto), and the processor 7201 performs other steps (for example, step S2102, but not limited thereto).

In some embodiments, terms such as interface circuit, interface, transceiving pin, transceiver and the like can be interchanged with each other.

In some embodiments, the chip 7200 further includes one or more memories 7202 for storing instructions. Optionally, all or part of the memories 7202 may be arranged outside the chip 7200.

The embodiments of the present disclosure further provide a storage medium. The storage medium stores instructions which, when run on a communication device 7100, cause the communication device 7100 to perform any of the above methods. Optionally, the storage medium is an electronic storage medium. Optionally, the storage medium is a computer-readable storage medium, but is not limited thereto, and it may also be a storage medium readable by other apparatuses. Optionally, the above storage medium may be a non-transitory storage medium, but is not limited thereto, and it may also be a transitory storage medium.

The embodiments of the present disclosure further provide a program product. When the program product is executed by a communication device 7100, the communication device 7100 is caused to perform any of the above methods. Optionally, the program product can be a computer program product.

The embodiments of the present disclosure further provide a computer program. When the computer program runs on a computer, the computer is caused to perform any of the above methods.

## Claims

1. A measurement method, performed by a network device, comprising:
sending first information to a terminal device, wherein the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap; and
stopping scheduling the reference signal within a specified gap time period, wherein the specified gap time period comprises a time period for performing a radio frequency operation in the overlapping time period.

2. The method according to claim 1, wherein the first measurement gap and the second measurement gap having the overlapping time period comprises at least one of:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

3. The method according to claim 1 or 2, wherein the reference signal comprises a first reference signal and a second reference signal, the first reference signal is a reference signal corresponding to the first measurement gap, and the second reference signal is a reference signal corresponding to the second measurement gap; and
wherein the first information is used for the terminal device to measure the first reference signal within a first time period, measure the second reference signal within a second time period, and measure the first reference signal and the second reference signal in parallel within the overlapping time period, wherein the first time period comprises a time period of the first measurement gap excluding the overlapping time period, and the second time period comprises a time period of the second measurement gap excluding the overlapping time period.

4. The method according to claim 3, wherein stopping scheduling the reference signal within the specified gap time period comprises:
in a case where a partial time period of the first measurement gap is overlapped with a partial time period of the second measurement gap, stopping scheduling the second reference signal within the specified gap time period, wherein the specified gap time period is a time period of the second measurement gap that is overlapped with a first visible interruption length (VIL), and the first VIL is a time period for performing the radio frequency operation in the first measurement gap.

5. The method according to claim 3, wherein stopping scheduling the reference signal within the specified gap time period comprises:
in a case where the first measurement gap contains the second measurement gap and a duration of the first measurement gap is greater than a duration of the second measurement gap, stopping scheduling the first reference signal within the specified gap time period, wherein the specified gap time period is a time period of the first measurement gap that is overlapped with a third time period, and the third time period is a time period for performing the radio frequency operation in the second measurement gap.

6. The method according to claim 3, wherein stopping scheduling the reference signal within the specified gap time period comprises:
in a case where the second measurement gap contains the first measurement gap and a duration of the second measurement gap is greater than a duration of the first measurement gap, stopping scheduling the second reference signal within the specified gap time period, wherein the specified gap time period comprises a first VIL, and the first VIL is a time period for performing the radio frequency operation in the first measurement gap.

7. The method according to any one of claims 1 to 6, wherein the reference signal comprises at least one of:
a synchronization signal block (SSB);
a channel state information reference signal (CSI-RS); and
a positioning reference signal (PRS).

8. The method according to any one of claims 1 to 7, wherein a frequency corresponding to the first measurement gap is different from a frequency corresponding to the second measurement gap.

9. The method according to any one of claims 1 to 8, wherein the first measurement gap and the second measurement gap are used for measuring a neighboring cell.

10. The method according to claim 9, wherein a frequency of a serving cell where the terminal device is located is different from a frequency of the neighboring cell.

11. The method according to any one of claims 1 to 10, wherein the terminal device is in a standalone (SA) operation mode.

12. A measurement method, performed by a terminal device, comprising:
receiving first information sent by a network device, wherein the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the network device stops scheduling a reference signal within a specified gap time period, wherein the specified gap time period comprises a time period for performing a radio frequency operation in the overlapping time period; and
measuring the reference signal based on the first measurement gap and the second measurement gap.

13. The method according to claim 12, wherein the first measurement gap and the second measurement gap having the overlapping time period comprises at least one of:
a partial time period of the first measurement gap is overlapped with a partial time period of the second measurement gap;
the first measurement gap contains the second measurement gap, and a duration of the first measurement gap is greater than a duration of the second measurement gap; and
the second measurement gap contains the first measurement gap, and the duration of the second measurement gap is greater than the duration of the first measurement gap.

14. The method according to claim 12 or 13, wherein the reference signal comprises a first reference signal and a second reference signal, the first reference signal is a reference signal corresponding to the first measurement gap, and the second reference signal is a reference signal corresponding to the second measurement gap, wherein measuring the reference signal based on the first measurement gap and the second measurement gap comprises:
measuring the first reference signal within a first time period, wherein the first time period comprises a time period of the first measurement gap excluding the overlapping time period;
measuring the second reference signal within a second time period, wherein the second time period comprises a time period of the second measurement gap excluding the overlapping time period; and
measuring the first reference signal and the second reference signal in parallel within the overlapping time period.

15. The method according to any one of claims 12 to 14, further comprising:
stopping measuring the reference signal within the specified gap time period.

16. The method according to claim 15, wherein stopping measuring the reference signal within the specified gap time period comprises:
in a case where a partial time period of the first measurement gap is overlapped with a partial time period of the second measurement gap, stopping measuring the second reference signal within the specified gap time period, wherein the specified gap time period is a time period of the second measurement gap that is overlapped with a first visible interruption length (VIL), and the first VIL is a time period for performing the radio frequency operation in the first measurement gap.

17. The method according to claim 15, wherein stopping measuring the reference signal within the specified gap time period comprises:
in a case where the first measurement gap contains the second measurement gap and a duration of the first measurement gap is greater than a duration of the second measurement gap, stopping measuring the first reference signal within the specified gap time period, wherein the specified gap time period is a time period of the first measurement gap that is overlapped with a third time period, and the third time period is a time period for performing the radio frequency operation in the second measurement gap.

18. The method according to claim 15, wherein stopping measuring the reference signal within the specified gap time period comprises:
in a case where the second measurement gap contains the first measurement gap and a duration of the second measurement gap is greater than a duration of the first measurement gap, stopping measuring the second reference signal within the specified gap time period, wherein the specified gap time period comprises a first VIL, and the first VIL is a time period for performing the radio frequency operation in the first measurement gap.

19. The method according to claim 13 or 18, wherein the method comprises:
determining that the second measurement gap contains the first measurement gap and a duration of the second measurement gap is greater than a duration of the first measurement gap, and not allowing an interruption to be introduced by the first measurement gap.

20. The method according to any one of claims 12 to 19, wherein the reference signal comprises at least one of:
a synchronization signal block (SSB);
a channel state information reference signal (CSI-RS); and
a positioning reference signal (PRS).

21. The method according to any one of claims 12 to 20, wherein a frequency corresponding to the first measurement gap is different from a frequency corresponding to the second measurement gap.

22. The method according to any one of claims 12 to 21, wherein the first measurement gap and the second measurement gap are used for measuring a neighboring cell.

23. The method according to claim 22, wherein a frequency of a serving cell where the terminal device is located is different from a frequency of the neighboring cell.

24. The method according to any one of claims 12 to 23, wherein the terminal device is in a standalone (SA) operation mode.

25. A network device, comprising:
a transceiver module, configured to send first information to a terminal device, wherein the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the first information is used for the terminal device to measure a reference signal based on the first measurement gap and the second measurement gap; and
a processing module, configured to stop scheduling the reference signal within a specified gap time period, wherein the specified gap time period comprises a time period for performing a radio frequency operation in the overlapping time period.

26. A terminal device, comprising:
a transceiver module, configured to receive first information sent by a network device, wherein the first information is used to configure a first measurement gap and a second measurement gap for the terminal device, the first measurement gap is a network controlled small gap (NCSG), the second measurement gap is a legacy measurement gap, the first measurement gap and the second measurement gap have an overlapping time period, and the network device stops scheduling a reference signal within a specified gap time period, wherein the specified gap time period comprises a time period for performing a radio frequency operation in the overlapping time period; and
a processing module, configured to measure the reference signal based on the first measurement gap and the second measurement gap.

27. A communication device, comprising:
one or more processors;
wherein the communication device is configured to perform the communication method according to any one of claims 1 to 11 or claims 12 to 24.

28. A storage medium, storing instructions, wherein the instructions, when run on a communication device, cause the communication device to perform the communication method according to any one of claims 1 to 11 or claims 12 to 24.

29. A communication system, comprising:
a network device, configured to perform the method according to any one of claims 1 to 11; and
a terminal device, configured to perform the method according to any one of claims 12 to 24.
